# EUROPEAN PATENT APPLICATION

(11) **EP 1 574 410 A1**
(43) Date of publication of application: **14.09.2005**
(21) Application number: 03780798.9
(22) Date of filing: 16.12.2003
(51) Int. Cl.: B60S 1/38

(54) **WIPER BLADE**

(30) Priority: 17.12.2002 JP 2002365754
(71) Applicant: Mitsuba Corporation, Gunma 376-8555 (JP)
(72) Inventor: HOSHINO, Takashi MITSUBA Corporation, Kiryu-shi, Gunma 376-8555 (JP)
(74) Representative: Rousset, Jean-Claude
(86) International application number: PCT/JP2003/016118
(87) International publication number: WO 2004/054859

(57) **Abstract**

A rubber holder on the DR side (22a) having rod-shaped spring members fixed to holding blocks and a plurality of holding bridges (26) fixed to these rod-shaped members at specified intervals is provided on a wiper blade on the DR side, and a stopper (34) is attached to the rubber holder on the DR side (22a). The stopper (34) has a plurality of deformation restricting blocks (35) disposed between engaging portions (37) formed on the holding bridges (26) and linking strip portions (36) for linking the deformation restricting blocks (35). When excessive bending force is applied to the wiper blade on the DR side, the deformation restricting blocks (35) interfere with the engaging portions (37), or the linking strip portions (36) restrict the increase of the distance between the deformation restricting blocks (35), thereby restricting the deformation of the rubber holder on the DR side (22a) within the range of elastic deformation of the rod-shaped spring members.

## Description

### TECHNICAL FIELD

The present invention relates to a wiper blade for wiping the surface of a windshield of a vehicle.

### BACKGROUND ART

A wiper device is provided on a vehicle such as an automobile to give a driver a good view by wiping off deposits such as raindrops, snow, bugs, and splashes from the car in front.

In general, such a wiper device has a wiper arm swung by an electric motor and a wiper blade fastened to the tip of the wiper arm. The wiper blade is kept pressed against the windshield by a spring mounted inside the wiper arm, and the swing of the wiper arm causes the wiper blade to reciprocate on the surface of the windshield for wiping.

For the achievement of the improved wiping performances, the pressing force applied from the wiper arm to the wiper blade needs to be distributed in the longitudinal direction of the blade rubber that directly touches the windshield. For this purpose, there has been developed a so-called tournament wiper blade in which plural stages of levers are provided and assembled between the blade rubber and the wiper arm to distribute the pressing force through the lever. The tournament wiper blade, however, has the problems that components for constituting the lever increase in number and the pressing force cannot be sufficiently distributed because the number of the levers is limited.

For that reason, in conventional wiper blades, as disclosed in Japanese Patent Application Laid-Open No. 6-340249, a plate spring member such as a vertebra formed in a flat plate shape approximately equal in length to a blade rubber by punching steel plate with a blank is fixed to the wiper arm, and a blade rubber is then directly attached to this plate spring member. In such a structure, the pressing force applied from the wiper arm is distributed to the entire blade rubber by the plate spring member.

In the wiper blade described above, however, the plate spring member is so formed as to be elastically deformed easily by the pressing force from the wiper arm. Therefore, such a wiper blade may lose its function due to the plastic deformation because the plate spring member exceeds the range of elastic deformation when excessive bending force is applied by for example mishandling.

An object of the present invention is to improve the durability of the wiper blade.

### DISCLOSURE OF THE INVENTION

The wiper blade according to the present invention is attached to a wiper arm swingably provided on a vehicle and wiping a windshield by swingably moving on the windshield, and is characterized by comprising: a blade rubber touching the windshield; a rubber holder having a plurality of holding bridges for holding the blade rubber and rod-shaped spring members for connecting the holding bridges to one another at specified intervals, the rubber holder being elastically deformable in a direction perpendicular to the windshield; and excessive deformation restricting means for restricting deformation of the rod-shaped spring member within a range of elastic deformation when excessive bending force is applied to the rubber holder.

The wiper blade according to the present invention is characterized in that the adjacent holding bridges are provided with interfering portions which interfere with each other when excessive bending force is applied to the rubber holder.

The wiper blade according to the present invention is characterized by comprising: a plurality of deformation restricting blocks provided between the holding bridges adjacent to each other and sandwiched between the holding bridges when excessive bending force is applied to the rubber holder.

The wiper blade according to the present invention is characterized by comprising: linking strip portions for connecting the deformation restricting blocks to one another, wherein the distance between the adjacent deformation restricting blocks is restricted when excessive bending force is applied to the rubber holder.

The wiper blade according to the present invention is characterized in that the holding bridge is formed by a steel plate and the interfering portion is formed by bending a body portion of the holding bridge.

The wiper blade according to the present invention is characterized by comprising a stopper ring formed in a ring shape and surrounding the adjacent interfering portions.

According to the present invention, even if excessive bending force is applied, the plastic deformation of the rod-shaped spring member can be prevented. Therefore, the permanent deformation of the wiper blade can be prevented and the durability of the wiper blade can be improved.

### BRIEF DESCRIPTION OF THE DRAWINGS

FIG. 1 is an explanatory diagram schematically illustrating a wiper device provided with a wiper blade in accordance with one embodiment of the present invention.
FIG. 2A is a partial-cutaway front view showing in detail the wiper blade on the DR side illustrated in FIG. 1. FIG. 2B is a partial-cutaway front view showing in detail the wiper blade on the AS side illustrated in FIG. 1.
FIG. 3A is a top plan view showing the rubber holder on the DR side illustrated in FIG. 2A. FIG. 3B is a top plan view showing the rubber holder on the AS side illustrated in FIG. 2B.
FIG. 4 is a cross-sectional view taken along the line A-A in FIG. 2A.
FIG. 5 is a perspective view illustrating in detail the rubber holder shown in FIG. 3A.
FIGS. 6A and 6B are cross-sectional views illustrating modified embodiments of the wiper blade on the DR side shown in FIG. 2A.
FIG. 7A is a cross-sectional view illustrating the normal state of the stopper attached to the rubber holder on the DR side. FIG. 7B is a cross-sectional view illustrating the state of the rubber holder on the DR side when excessive force is applied to the rubber holder in the reverse direction. FIG. 7C is a cross-sectional view illustrating the state of the rubber holder on the DR side when excessive force is applied to the rubber holder in the forward direction.
FIG. 8A is an explanatory diagram showing a combination of a rod-shaped spring member and a vertebra in the wiper blade on the DR side. FIG. 8B is an explanatory diagram showing a combination of a rod-shaped spring member and a vertebra in the wiper blade on the AS side.
FIG. 9 is a perspective view showing a modified embodiment of the rubber holder on the DR side shown in FIG. 3A.
FIG. 10 is a cross-sectional view taken along the line B-B in FIG. 9.
FIG. 11A is a cross-sectional view illustrating the normal state of the rubber holder. FIG. 11B is a cross-sectional view illustrating the state of the rubber holder when excessive force is applied to the rubber holder in the reverse direction. FIG. 11C is a cross-sectional view illustrating the state of the rubber holder when excessive force is applied to the rubber holder in the forward direction.
FIG. 12 is a perspective view showing a part of a modified embodiment of the rubber holder on the DR side shown in FIG. 3A.
FIG. 13A is a cross-sectional view illustrating the normal state of the rubber holder shown in FIG. 12. FIG. 13B is a cross-sectional view illustrating the state of the rubber holder when excessive force is applied to the rubber holder in the forward direction.

### BEST MODE FOR CARRYING OUT THE INVENTION

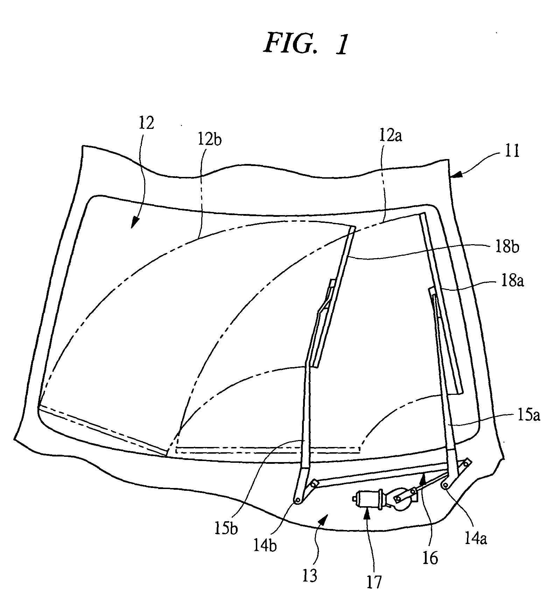

As shown in FIG. 1, a wiper device 13 is provided on a vehicle 11 to give a driver a good view by wiping raindrops, splashes from a vehicle in from, and others adhering to a windshield 12.

The wiper device 13 has a wiper arm 15a on the side of a driver's seat or on the DR side, which is swingably provided with respect to the vehicle 11 and fixed to a wiper shaft 14a rotatably supported by the vehicle 11, and similarly, a wiper arm 15b on the side of an assistant driver's seat or on the AS side, which is swingably provided with respect to the vehicle 11 and fixed to a wiper shaft 14b rotatably supported by the vehicle 11. The wiper shafts 14a and 14b are connected to a wiper motor 17 through a link mechanism 16. The rotation of the wiper motor 17 swings the wiper arms 15a and 15b within the range of a given angle.

The wiper blade 18a on the side of a driver's seat or on the DR side is attached to the tip of the wiper arm on the DR side 15a, and the wiper blade 18b on the side of an assistant driver's seat or on the AS side is attached to the tip of the wiper arm 15b on the AS side. Spring members (not shown) are fitted inside the wiper arms 15a and 15b, and the wiper blades 18a and 18b are pressed by the wiper arms 15a and 15b to touch the windshield 12 resiliently. The swing of the wiper arms 15a and 15b moves the wiper blades 18a and 18b swingably on the windshield 12 in wiping areas 12a and 12b between an upper reversal position and a lower reversal position located at the lower end of the windshield 12, thereby wiping the windshield 12.

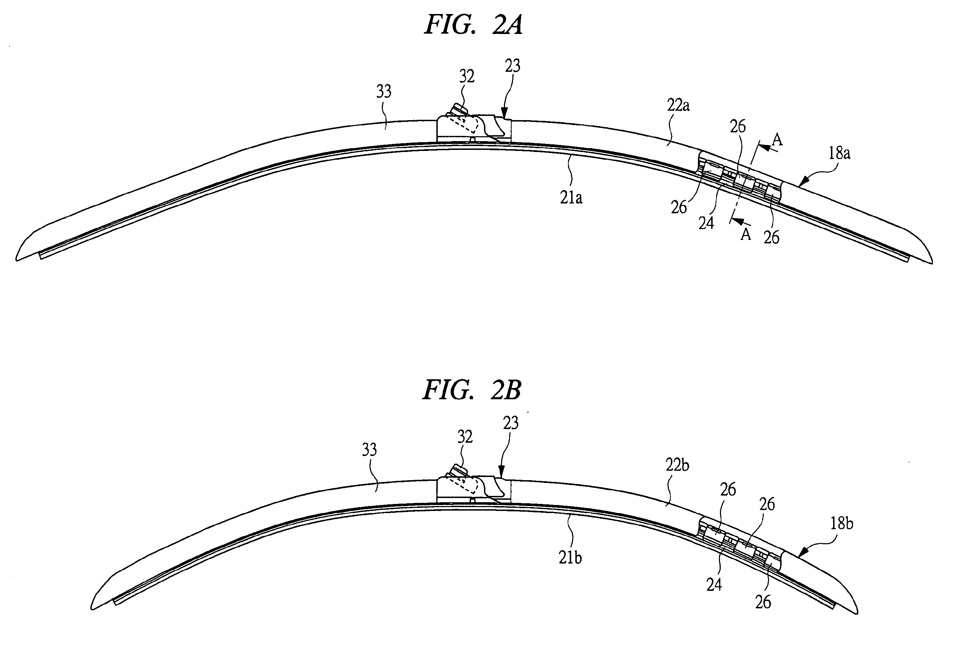

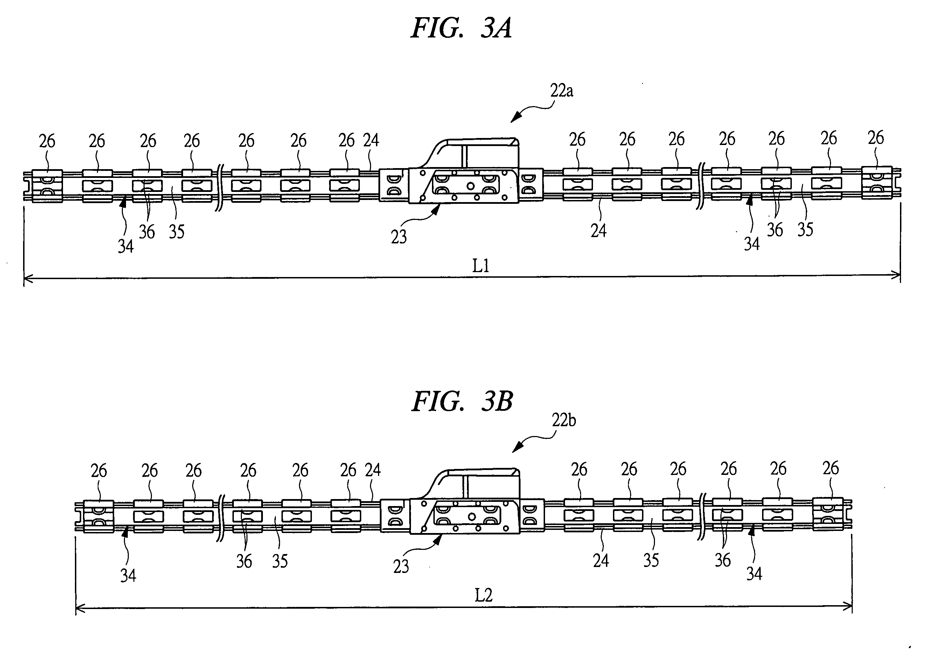

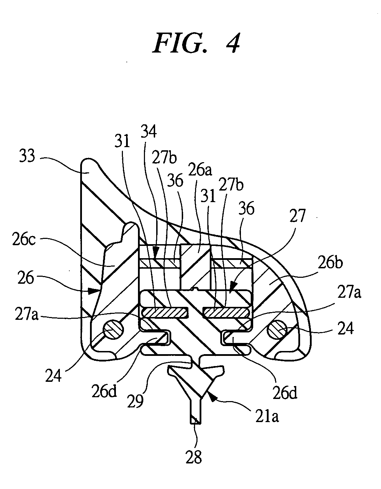

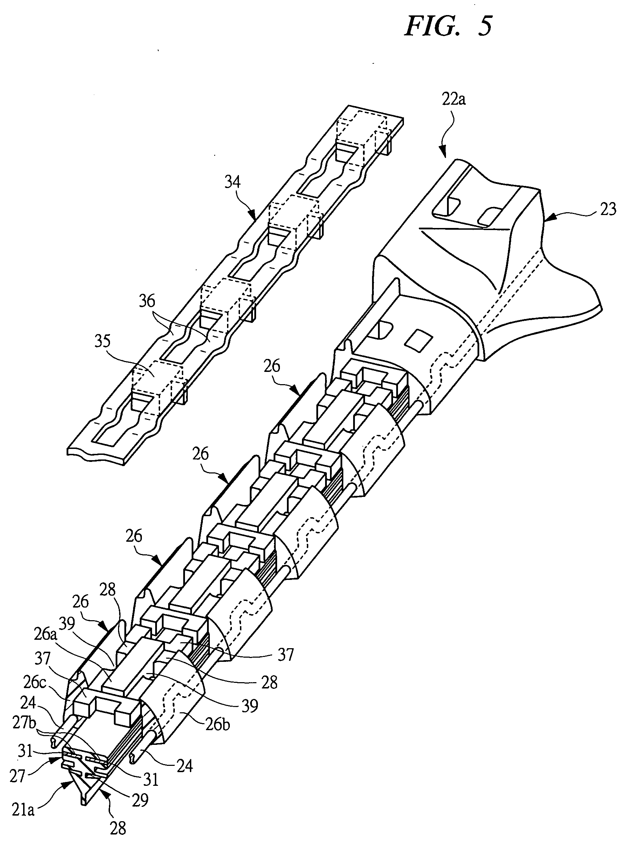

FIG. 2A is a partial-cutaway front view showing in detail the wiper blade on the DR side illustrated in FIG. 1. FIG. 2B is a partial-cutaway front view showing in detail the wiper blade on the AS side illustrated in FIG. 1. FIG. 3A is a top plan view showing the rubber holder on the DR side illustrated in FIG. 2A. FIG. 3B is a top plan view showing the rubber holder on the AS side illustrated in FIG. 2B. FIG. 4 is a cross-sectional view taken along the line A-A in FIG. 2A. FIG. 5 is a perspective view illustrating in detail the rubber holder shown in FIG. 3A.

As shown in FIG. 2A, the wiper blade on the DR side 18a has a blade rubber 21a directly touching the windshield 12 and a rubber holder 22a on the side of a driver's seat or on the DR side that supports the blade rubber 21a, and the wiper blade 18a is smaller in radius of curvature than the windshield 12 in a normal state or in a state where the blade is away from the windshield 12. Similarly, as shown in FIG. 2B, the wiper blade 18b on the AS side has a blade rubber 21b directly touching the windshield 12 and a rubber holder 22b on the side of an assistant driver's seat or on the AS side that supports the blade rubber 21b, and the wiper blade 18b is smaller in radius of curvature than the windshield 12 in a normal state or in a state where the blade is away from the windshield 12. The length L2 of the wiper blade on the AS side 18b is shorter than the length L1 of the wiper blade on the DR side 18a, and the wiper blade 18b curves shaper than the wiper blade on the DR side 18a at the ends in the longitudinal direction thereof.

The wiper blade on the DR side 18a and the wiper blade on the AS side 18b have the basically same structure except that mentioned above. For that reason, the wiper blade on the DR side 18a is first described below.

As shown in FIG. 3A, a supporting block 23 used as a support portion is provided on the approximately central position in the longitudinal direction of the rubber holder on the DR side 22a. Two rod-shaped spring members 24 or first spring members are fixed to the supporting block 23 in such a way that the spring members are shifted to each other in a moving direction or in a wiping direction that the wiper blade on the DR side 18a wipes the windshield 12. The rod-shaped spring members 24 are approximately circular in section, and the shaft center thereof is arcuately curved with a radius of curvature smaller than that of the windshield 12. Also, the rod-shaped spring members 24 are fixed to the supporting block 23 at the approximately central position in the longitudinal direction thereof and extend from the both sides of the supporting block 23 in a given length.

A plurality of holding bridges 26 (for example, 12 holding bridges in this embodiment) also referred to as bridging member or element are provided on one side of the supporting block 23. The holding bridges 26 are arrayed at specified intervals and fixed to the rod-shaped spring members 24. That is, the holding bridges 26 are connected with one another at specified intervals by the rod-shaped spring members 24. Similarly, a plurality of holding bridges 26 (for example, 12 holding bridges in this embodiment) are provided on the other side the supporting block 23 and molded on the rod-shaped spring members 24 at specified intervals. That is, the holding bridges 26 are connected with one another at specified intervals by the rod-shaped spring members 24.

As shown in FIG. 4, the holding bridges 26 have the C-shaped cross section composed of a base wall portion 26a and a pair of side wall portions 26b and 26c approximately perpendicular to the base wall portion 26a. Each of the rod-shaped spring members 24 passes through one side wall portion 26b and the other side wall portion 26c, respectively.

As shown by the broken lines in FIG. 5, the rod-shaped spring members 24 are bent in a crank shape in each of the side wall portions 26a and 26b and the holding bridges 26 are fixed to the rod-shaped spring members 24 by the crank. More specifically, the rod-shaped spring members 24 are connected and fixed to one another by the holding bridges 26 serving as deformation restricting members to restrict the respective relative positions of the members 24, which makes the members 24 elastically deformable in the direction perpendicular to the windshield 12, but restricts the elastic deformation thereof in the wiping direction.

In this embodiment, crank-shaped bent portions are provided on the rod-shaped spring members 24 to fix the holding bridges 26. Alternatively, for example, the knurling or the roulette is also available. Also, the holding bridges 26 are molded onto the rod-shaped spring members 24. Alternatively, it is also possible to fix the supporting blocks 23 and the holding bridges 26 previously molded onto another component to the rod-shaped spring members 24.

In such a structure, the rubber holder on the DR side 22a is elastically deformable in the direction perpendicular to the windshield 12 with the fulcrum at the supporting block 23.

Also, holding pawls 26d serving as holding portions are formed on the side wall portions 26b and 26c of the holding bridge 26, and the blade rubber 21a is held on the holding bridges 26 by the holding pawls 26d.

The blade rubber 21a has a base portion 27 held by the holding bridges 26 and an edge portion 28 for wiping the windshield 12, and the shape thereof is the same as that of a blade rubber used in a conventionally well-known tournament wiper blade. Holding slots 27a are formed in the base portion 27, and the blade rubber 21a is held in the holding bridges 26 or the rubber holder on the DR side 22a by engaging the holding pawls 26d of the holding bridges 26 with the holding slots 27a. The base portion 27 is connected to the edge portion 28 through a thinly-formed neck portion 29, and the edge portion 28 is held in a suitable contact angle when touching the windshield 12 while tilting via the neck portion 29. Incidentally, natural rubber and chloroprene rubber are used for the blade rubber 21a. Alternatively, a compound of natural rubber and chloroprene rubber that has advantages of both materials is also used in many cases. The blade rubber 21a is produced by extrusion of these materials and has the same cross section throughout the longitudinal direction.

Also, fitting slots 27b are formed in both side portions above the holding slots 27a of the blade rubber 21a, and the vertebras 31 as flat plate spring members are fitted to the fitting slots 27b. The vertebras 31 are so formed as to be curbed in advance with a predetermined curvature, and the blade rubber 21a is bent by the spring force of the vertebra 31. The effect of the vertebra 31 is described later.

As described above, in the wiper blade on the DR side 18a, the blade rubber 21a is supported by the holding pawls 26d formed on the deformation restricting members or the holding bridges 26 fixed to the rod-shaped spring members 24. Therefore, a blade rubber used in a conventionally well-known tournament wiper blade can be used without any modification, which makes the wiper blade more versatile. Also, since the blade rubber 21a can be detachably fitted to the holding bridges 26, the blade rubber 21a can be replaced with ease.

A clip 32 for fixing the blade to the wiper arm on the DR side 15a is provided on the supporting blocks 23. The wiper blade on the DR side 18a is fixed to the wiper arm on the DR side 15a in a state where the supporting block 23 is supported by the wiper arm on the DR side 15a, and a pressing force is applied from the wiper arm on the DR side 15a to the supporting block 23. The blade rubber 21a supported by the rubber holder on the DR side 22a is curved together with the rubber holder on the DR side 22a by the elastic force of the rod-shaped spring members 24 in a normal state. When the blade rubber 21a touches the windshield 12 to apply the pressing force of the wiper arm on the DR side 15a to the supporting block 23, the rubber holder on the DR side 22a is elastically deformed in accordance with the curvature of the windshield 12 and then the blade rubber 21a touches the windshield 12. More specifically, the rod-shaped spring members 24 are elastically deformed by the pressing force from the wiper arm 15a so that the rubber holder on the DR side 22a follows the curvature of the windshield 12. Then, the reaction force of the rod-shaped spring members 24 due to the elastic deformation is resultantly transmitted to the holding bridges 26 and the rubber holder on the DR side 22a produces the force for pressing the blade rubber 21a against the windshield 12. Also, the vertebra 31 is attached to the blade rubber 21a, and the elastic force of the vertebra 31 in addition to the reaction force of the rod-shaped spring members 24 are applied to the blade rubber 21a when the pressing force of the wiper arm 15a is applied to the rubber holder on the DR side 22a. Consequently, the reaction force of the rod-shaped spring members 24 discontinuously applied in the longitudinal direction of the blade rubber 21a is compensated by the elastic force of the vertebra 31 continually produced in the longitudinal direction, and the pressure of the blade rubber 21a against the windshield 12 is uniformly distributed in the longitudinal direction. Thus, the pressing force from the wiper arm on the DR side 15a is distributed and applied to the blade rubber 21a by the rod-shaped spring members 24 and the vertebra 31, and the blade rubber 21a touches the windshield 12 with a predetermined distribution pressure characteristics.

The wiper blade on the DR side 18a has a fin 33 as fin member formed of, for example, hard rubber. The fin 33 is fitted on the holding bridges 26 to cover the entire rubber holder on the DR side 22a.

For this reason, the cross-sectional configuration of the wiper blade on the DR side 18a is superior in aerodynamic characteristics. That is, it is possible to prevent the wiper blade on the DR side 18a from floating during high speed driving to improve wiping performance. Also, since the wiper blade on the DR side 18a itself is of fin shape, the height of the wiper blade on the DR side is reduced to improve the driver's view.

At this time, since the rod-shaped spring members 24 with a nearly-circular cross section are used as spring members for distributing and applying the pressing force from the wiper arm on the DR side 15a to the blade rubber 21a, the rod-shaped spring members 24 accounts for just a fraction of the cross section of the wiper blade on the DR side 18a, and the design freedom is not decreased when a cross-sectional configuration of the wiper blade on the DR side 18a is determined in consideration of aerodynamic characteristics. Consequently, the holding bridge 26 and the fin 33 can be designed to have the optimum configuration in terms of the aerodynamic characteristics.

As described above, since the wiper blade on the DR side 18a uses the rod-shaped spring members 24 as the elastic member for distributing and applying the pressing force from the wiper arm on the DR side 15a to the blade rubber 21a, the area of the rod-shaped spring members 24 accounting for the cross-sectional configuration of the wiper blade on the DR side 18a can be reduced, and the design freedom in the cross-sectional configuration of the wiper blade on the DR side 18a can be improved.

As illustrated, the rod-shaped spring members 24 are arranged on the sides of a wiping direction of the blade rubbers 21a, respectively. That is, the rod-shaped spring members 24 are arranged on one side and the other side of the blade rubber 21a. Therefore, the height of the wiper blade on the DR side 18a in the direction perpendicular to the windshield 12 can be reduced.

As described above, since the height of the wiper blade on the DR side 18a in the direction perpendicular to the windshield 12 can be reduced, it is possible to improve the driver's view in a vehicle 11 using this wiper blade on the DR side 18a.

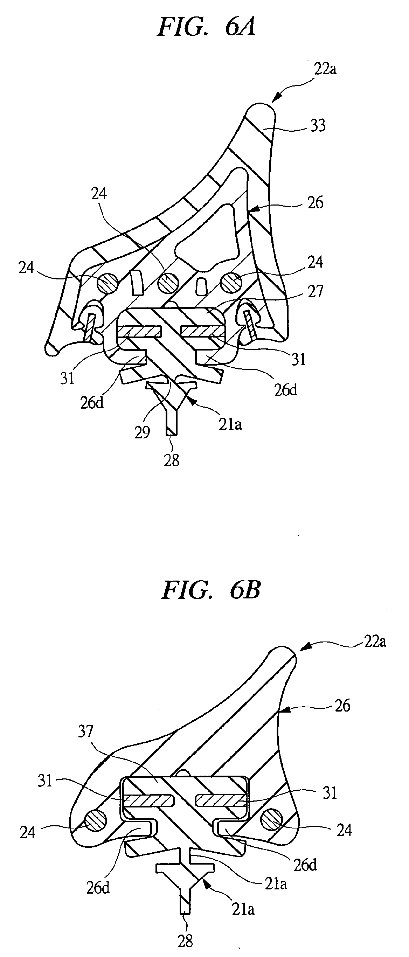

In this embodiment, two rod-shaped spring members 24 are provided, but a plurality of the spring members, for example, three members shown in FIG. 6A are also available.

Also, in this embodiment, the rod-shaped spring members 24 are arranged on the sides of a wiping direction of the blade rubbers 21a, respectively. Alternatively, as shown in FIG. 6A, the spring members can be provided on the upper portion of the blade rubber 21a opposite to the windshield 12. In that case, the width of the wiper blade on the DR side 18a on the sides of the wiping direction can be reduced.

Furthermore, in this embodiment, the rod-shaped spring members 24 are adjacently disposed on the one side and the other side of the blade rubber 21a, respectively. Alternatively, a plurality of the rod-shaped spring members 24 can be arranged on the one side.

Still furthermore, in this embodiment, the rubber holder on the DR side 22a is covered with the fin 33. Alternatively, as shown in FIG. 6B, the holding bridge 26 itself can be configured in a fin shape. Incidentally, the members and component parts corresponding to those mentioned above are denoted by the same reference numerals in FIGS. 6A and 6B.

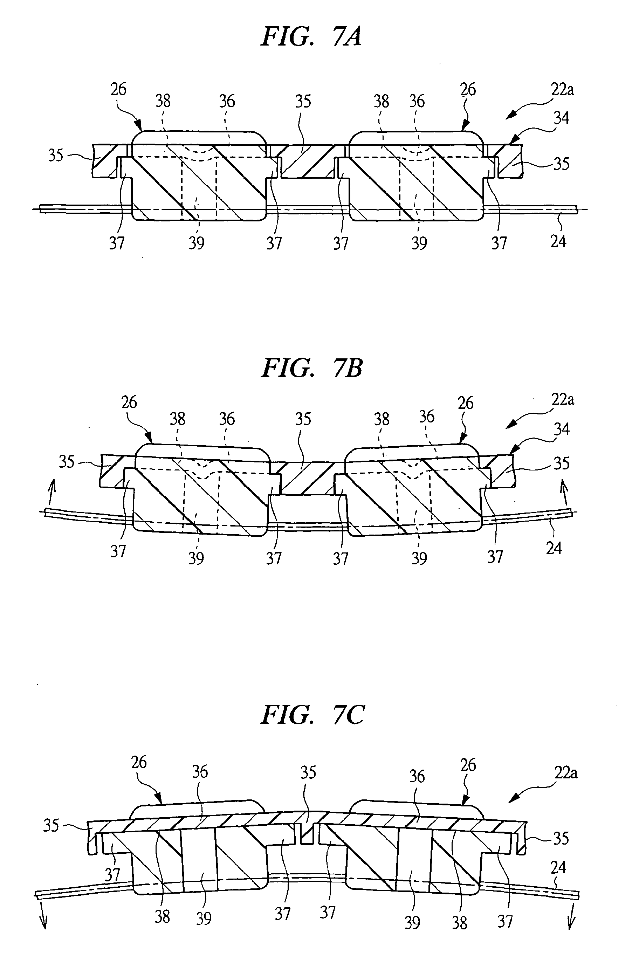

FIG. 7A is a cross-sectional view illustrating the normal state of the stopper attached to the rubber holder on the DR side. FIG. 7B is a cross-sectional view illustrating the state of the rubber holder on the DR side when excessive force is applied to the rubber holder in the reverse direction. FIG. 7C is a cross-sectional view illustrating the state of the rubber holder on the DR side when excessive force is applied to the rubber holder in the forward direction.

As shown in FIG. 3A, a stopper 34 is provided on the rubber holder on the DR side 22a as means of restricting excessive deformation.

The stopper 34 has a plurality of deformation restricting blocks 35 disposed between the adjacent holding bridges 26 and linking strip portions 36 coupling the deformation restricting blocks 35 with one another. Each one stopper is provided for one and the other sides of the supporting blocks 23.

As shown in FIG. 5, U-shaped engaging portions 37 are formed at both ends of the holding bridges 26. The deformation restricting blocks 35 are arranged in engagement with these engaging portions 37 between the adjacent holding bridges 26. Two slots 38 extending in the direction of connecting the engaging portions 37 are formed in the base wall portions 26a of the holding bridges 26, and the linking strip portions 36 are disposed in the slots 38. Also, through bores 39 passing though the holding bridges 26 in the direction perpendicular to the slots 38 are formed at the approximately central position of the slots 38. As shown in FIG. 7A, the linking strip portions 36 are slightly loose in the through bores 39 when the wiper blade on the DR side 18a touches the windshield 12 or in a normal state.

As shown in FIG. 7B, when the excessive force in the reverse direction, that is, in the direction where the holder is bent backward with respect to the windshield 12 is applied to the rubber holder on the DR side 22a, the distance between the engaging portions 37 is narrowed with the fulcrum at the rod-shaped spring members 24, and the deformation restricting blocks 35 between the engaging portions 37 are sandwiched to interfere with the engaging portions 37, thereby preventing the adjacent holding bridges 26 from approaching within a predetermined distance. At this time, the rod-shaped spring members 24 are kept deformed in the range of elastic deformation and do not reach the range of plastic deformation. That is, when the rod-shaped spring members 24 lie in the range of elastic deformation, the stopper 34 interferes with the engaging portions 37 to restrict the rubber holder on the DR side 22a from being bent excessively. Therefore, the deformation of the rod-shaped spring members 24 is restricted within the range of elastic deformation even if the excessive force in the direction where the wiper blade is bent backward is applied to the wiper blade on the DR side 18a, and the plastic deformation is prevented.

In contrast, as shown in FIG. 7C, when the excessive force in the forward direction, that is, in the direction where the holder is bent forward over the windshield 12 is applied to the rubber holder on the DR side 22a, the distance between the engaging portions 37 is widened with the fulcrum at the rod-shaped spring members 24, and both the deformation restricting blocks 35 and the holding bridges 26 move in the direction where they are parted from each other with the fulcrum at the rod-shaped spring members 24. Accordingly, the slack of the linking strip portions 36 is reduced to produce the tension in the linking strip portions 36, and the further increase of the distance between the adjacent deformation restricting blocks 35 is prevented. At this time, the rod-shaped spring members 24 are kept deformed in the range of elastic deformation and do not reach the range of plastic deformation. That is, when the rod-shaped spring members 24 lie in the range of elastic deformation, the stopper 34 prevents the distance between the deformation restricting blocks 35 or the holding bridges 26 from being increased over a predetermined distance to restrict the rubber holder on the DR side 22a from being bent excessively. Therefore, the deformation of the rod-shaped spring members 24 is restricted within the range of elastic deformation even if the excessive force in the direction where the wiper blade is bent forward is applied to the wiper blade on the DR side 18a, and the plastic deformation is prevented.

As described above, in the wiper blade on the DR side 18a, the stopper 34 restricts the excessive bending of the rubber holder on the DR side 22a even when the excessive bending force is applied. Therefore, the plastic deformation of the rod-shaped spring members 24 can be prevented and the durability of the wiper blade on the DR side 18a can be improved.

In this embodiment, the plastic deformation of the rod-shaped spring members 24 is prevented by using the deformation restricting blocks 35 disposed between the adjacent holding bridges 26. Alternatively, the excessive bending can be restricted also by forming the interfering portions on the adjacent holding bridges 26 so that the interfering portions of the adjacent holding bridges 26 directly interfere with each other to restrict the excessive bending when the excessive force is applied to the wiper blade on the DR side 18a.

Also, in this embodiment, the deformation restricting blocks 35 are mutually connected by the linking strip portions 36. Alternatively, it is also possible to provide the deformation restricting blocks 35 separately so as to restrict the excessive bending on one side of the rubber holder on the DR side 22a. In this case, the deformation restricting blocks 35 can be provided on both sides of the rod-shaped spring members 24 such as the windshield 12 side and the opposite side thereof so as to restrict the deformations in both of the reverse and forward directions.

Meanwhile, as shown in FIG. 2B and FIG. 3B, the wiper blade on the AS side 18b has the basically same structure as the wiper blade on the DR side 18a, and the function and effect thereof are also the same as those of the wiper blade on the DR side 18a.

The difference in the wiper blade on the AS side 18b from the wiper blade on the DR side 18a will be described. In FIGS. 2B and 3B, the members and component parts corresponding to those mentioned above are denoted by the same reference numerals.

The rubber holder of the wiper blade on the AS side 18b, that is, the rubber holder on the AS side 22b is formed based on a rubber holder having the same structure as the rubber holder on the DR side 22a, and the rubber holder on the AS side 22b is formed by removing the two holding bridges 26 located at both ends of the rubber holder. The rubber holder is thus formed in a shorter shape in comparison with the rubber holder on the DR side 22a. More specifically, the rubber holder on the AS side 22b is formed from the rubber holder in which the twelve holding bridges 26 are fixed at specified intervals to the rod-shaped spring members 24 on both sides of the supporting block 23 similar to the rubber holder on the DR side 22a, by cutting the rod-shaped spring member 24 at the position between the holding bridge 26 at the one distal end and the holding bridge 26 adjacent thereto and cutting the rod-shaped spring member 24 at the position between the holding bridge 26 at the other distal end and the holding bridge 26 adjacent thereto. Consequently, the rubber holder on the AS side 22b is formed so as to have a predetermined length, that is, a length shorter by two holding bridges than the rubber holder on the DR side 22a.

Therefore, when producing the wiper blades on the DR and AS sides 18a and 18b which are different in length, it is unnecessary to prepare two different kinds of the rod-shaped spring members 24 which are different in length corresponding to the wiper blades on the DR and AS sides 18a and 18b and to produce two different kinds of rubber holders different in length by using the two members 24. In other words, by producing and storing the rubber holders on the DR side 22a in advance, the rubber holder on the AS side 22b can be readily produced on the basis of the rubber holder 22a. Since the rod-shaped spring member 24 has a circular cross section, it is easier to cut it than a flat-plate spring member such as the vertebra.

In this embodiment, the rubber holder formed to meet the length of the wiper blade on the DR side 18a is shortened to meet the length of the wiper blade on the AS side 18b. Alternatively, a large number of different kinds of rubber holders different in length can be formed by cutting the rod-shaped spring members 24 at the position between two arbitrary holding bridges 26 to remove a predetermined number of the holding bridges from the rubber holder with a predetermined length. For example, the rubber holder on the DR side 22a used for the wiper blade on the DR side 18a can be formed by cutting the rubber holder with a length larger than the rubber holder on the DR side 22a.

In the wiper blades 18a and 18b, the length of the rubber holder can be changed merely by cutting the rod-shaped spring members 24 at the position between the two holding bridges 26. Therefore, wiper blades different in length can be easily produced.

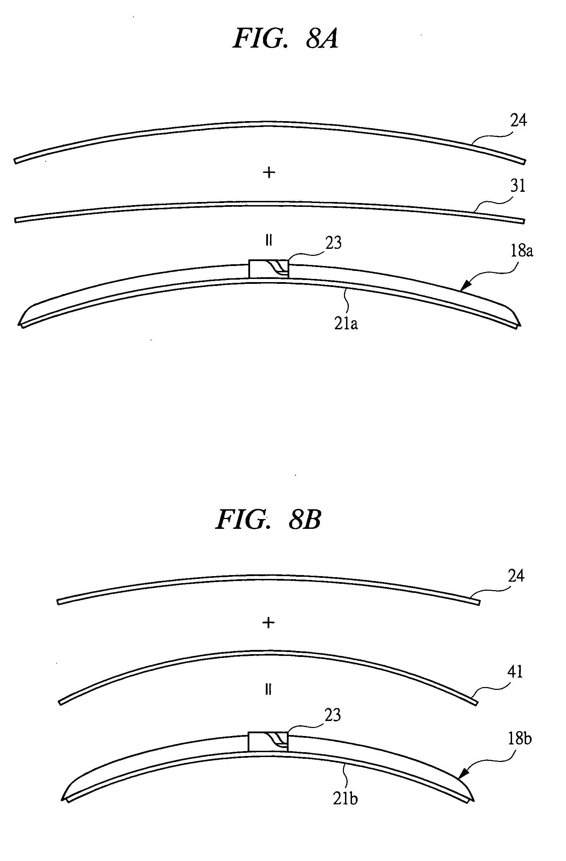

FIG. 8A is an explanatory diagram showing a combination of a rod-shaped spring member and a vertebra in the wiper blade on the DR side, and FIG. 8B is an explanatory diagram showing a combination of a rod-shaped spring member and a vertebra in the wiper blade on the AS side.

As described above, the rubber holder on the AS side 22b with the same structure but different in length from the rubber holder on the DR side 22a is used in the wiper blade on the AS side 18b. On the other hand, the blade rubber 21b that is shorter than the blade rubber 21a used in the wiper blade on the DR side 18a is used to meet the length of the rubber holder on the AS side 22b. Also, the vertebra 41 attached to the blade rubber 21b is more sharply curved than the vertebra 31 used in the wiper blade on the DR side 18a. Therefore, the wiper blade on the AS side 18b curves more sharply than the wiper blade on the DR side 18a.

As shown in FIG. 8A, the rod-shaped spring member 24 which forms the rubber holder on the DR side 22a is curved with the radius of curvature smaller than that of the windshield 12, and the vertebra 31 used as a second spring member fitted to the blade rubber 21a used in the wiper blade on the DR side 18a has a larger radius of curvature and is curved less sharply than the rod-shaped spring members 24. The vertebra 31 is formed in a flat plate which is thin in the direction perpendicular to the windshield 12 and is elastically deformable in the direction perpendicular to the windshield 12. Therefore, when the wiper blade on the DR side 18a touches the windshield 12 and the pressing force from the wiper arm on the DR side 15a is applied, the spring force of the rod-shaped spring members 24 is compensated by that of the vertebra 31. That is, when a pressing force from the wiper arm on the DR side 15a is applied, the combined spring force of the spring forces of the rod-shaped spring members 24 and the vertebra 31 is applied to the blade rubber 21a, and the distribution pressure of the blade rubber 21a to the windshield 12 is determined by the combined spring force. Consequently, the blade rubber 21a follows the windshield 12.

On the other hand, as shown in FIG. 8B, since the rubber holder on the AS side 22b is formed on the basis of the rubber holder on the DR side 22a, the rod-shaped spring member 24 as a first spring member thereof is also curved with the radius of curvature smaller than that of the windshield 12 similar to the rubber holder on the DR side 22a. Also, the flat plate spring member or the vertebra 41 used as a second spring member attached to the blade rubber 21b used in the wiper blade on the AS side 18b is smaller in radius of curvature than the vertebra 31 attached to the blade rubber on the DR side 21a. Consequently, when the wiper blade on the AS side 18b touches the windshield 12 and the pressing force from the wiper arm on the AS side 15b is applied, the spring force of the rod-shaped spring members 24 is compensated by the spring force of the vertebra 41 more strongly than that in the case of the wiper blade on the DR side 18a, that is, the combined spring force of the spring force of the rod-shaped spring members 24 in the wiper blade on the AS side 18b and the spring force of the vertebra 41 is stronger than that in the case of the wiper blade on the DR side 18a, with the result that the wiper blade on the AS side 18b is sharply curved than the wiper blade on the DR side 18a. Therefore, when the pressing force is applied from the wiper arm on the AS side 15b, the distribution pressure of the blade rubber 21b to the windshield 12 is determined by the combined spring force. Consequently, the wiper blade on the AS side 18b can follow the windshield 12 with a sufficient distribution pressure even at the position where curvature is sharper at the side portion of the windshield 12 in a lower reversal position of the wiper.

In other words, in the wiper blades 18a and 18b, for the rubber holders on the DR side 22a and the AS side 22b using the same rod-shaped spring members 24, the vertebra 31 and 41 with different characteristics are attached to the blade rubbers 21 and 21b so that the characteristics of the wiper blades 18a and 18b can be changed. Also, since the blade rubbers 21a and 21b are easily detachable from the rubber holders 22a and 22b, the vertebras 31 and 41 can be replaced with other one with different characteristics. Note that, in this embodiment, the vertebra 41 used in the wiper blade on the AS side 18b is different in characteristics from the one for the wiper blade on the DR side 18a. Alternatively, for example, by replacing the vertebra 31 attached to the blade rubber on the DR side 21a with the other one with different characteristics, the wiper blade on the DR side 18a can be adapted for the windshields with various curvatures.

As stated above, in the wiper blades 18a and 18b, the characteristics of the vertebra 31 and 41 attached to the blade rubbers 21a and 21b are changed so as to adapt the wiper blades 18a and 18b for the windshields with various curvatures. Therefore, the versatility of the wiper blades 18a and 18b can be improved. Additionally, in the wiper blades 18a and 18b, since the characteristics thereof can be diversely changed based on the rubber holders 22a and 22b using the rod-shaped spring members 24 with the predetermined characteristics, it is unnecessary to prepare a large number of different kinds of rod-shaped spring members with different characteristics.

Furthermore, in the wiper blades 18a and 18b, if the elastic force of the rod-shaped spring members 24 and the vertebras 31 and 41 deteriorates due to aging and so forth and the distribution pressure of the blade rubbers 21a and 21b on the windshield 12 becomes unsuitable, the distribution pressure of the blade rubbers 21a and 21b, that is, the wiping performance can be readily controlled by replacing the vertebras 31 and 41.

Thus, in the wiper blades 18a and 18b, the distribution pressure of the blade rubbers 21a and 21b can be readily adjusted by replacing the vertebras 31 and 41 attached to the blade rubbers 21a and 21b with the ones with different characteristics. Therefore, the wiping performance of the blade rubbers 21a and 21b can be easily controlled.

Note that the vertebras 31 and 41 as flat plate spring members are used as the second spring members in this embodiment. Alternatively, a spring member formed in a rod shape is also available.

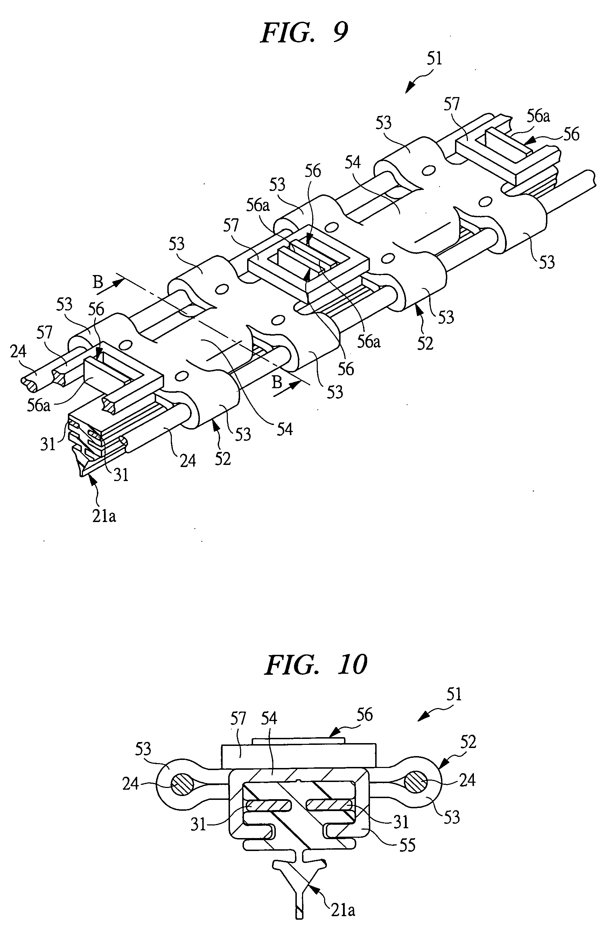

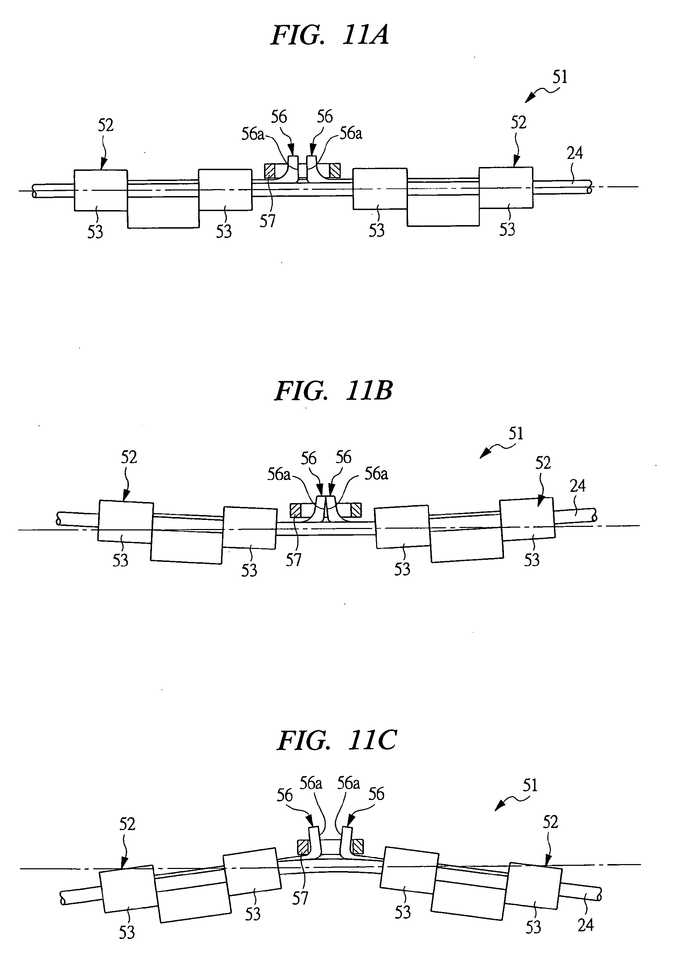

FIG. 9 is a perspective view showing a modified embodiment of the rubber holder on the DR side shown in FIG. 3A. FIG. 10 is a cross-sectional view taken along the line B-B in FIG. 9. FIG. 11A is a cross-sectional view illustrating the normal state of the rubber holder. FIG. 11B is a cross-sectional view illustrating the state of the rubber holder when excessive force is applied to the rubber holder in the reverse direction. FIG. 11C is a cross-sectional view illustrating the state of the rubber holder when excessive force is applied to the rubber holder in the forward direction. Note that the members and component parts in FIGS. 9 to 11 corresponding to those mentioned above are denoted by the same reference numerals.

A rubber holder 51 shown in FIG. 9 is provided with a plurality of holding bridges 52 formed by press working of metal or steel plate instead of the holding bridges 26 made of resin in the rubber holder on the DR side 22a shown in FIG. 3A. The holding bridges 52 are coupled with each other by the rod-shaped spring members 24 at specified intervals in the longitudinal direction as is the case with the rubber holder on the DR side 22a, and thus, the rubber holder 51 is elastically deformable in the direction perpendicular to the windshield 12. In this case, the holding bridge 52 has four fixed legs 53. The fixed legs 53 are wound around the periphery of the rod-shaped spring members 24 and the distal ends thereof are fixed to a body portion 54 by fixing means such as spot welding, thereby fixing them to the rod-shaped spring members 24. Note that, in the illustrated case, the holding bridge 52 is formed from steel plate, but can be formed from plates made of other metallic materials.

As shown in FIG. 10, the holding bridge 52 is provided with a holding portion 55 formed in a "C" shape in the cross section by bending the body portion 54, and the blade rubber 21a touching the windshield 12 is held in the holding bridge 52 by the holding portion 55.

The holding bridge 52 is provided with a pair of stopper portions 56 as excessive deformation restricting means extending from the body portion 54 toward both sides in the longitudinal direction of the rubber holder 51. The stopper portion 56 is formed by bending the ends of the body portion 54 at an approximately right angle and has stopper surfaces 56a nearly perpendicular to the axial direction of the rubber holder 51. As shown in FIG. 11A, when the wiper blade using the rubber holder 51 touches the windshield 12, that is, in a normal state, the stopper surface 56a is opposed to the other stopper surface 56a of the adjacent holding bridge 52 at specified intervals.

As shown in FIG. 11B, when excessive bending force is applied to the rubber holder 51 in the reverse direction, that is, in the direction where the holder is bent backward with respect to the windshield 12, the opposing stopper surfaces 56a interfere with each other, thereby preventing the adjacent holding bridges 52 from approaching within a predetermined distance. At this time, the rod-shaped spring members 24 are kept deformed within the range of elastic deformation, and do not reach the range of plastic deformation. That is, when the rod-shaped spring members 24 lie in the range of elastic deformation, the stopper portions 56 or interfering portions cause the stoppers 56a to interfere with each other to prevent the rubber holder 51 from being bent excessively. Therefore, the deformation of the rod-shaped spring members 24 is restricted within the range of elastic deformation even if excessive bending force is applied in the direction where the rubber holder 51 is bent backward, and the plastic deformation is prevented.

Also, a stopper ring 57 as means for restricting excessive deformation is engaged with each of the opposing stopper portions 56 of the adjacent holding bridges 52. The stopper ring 57 is formed in the shape of a ring surrounding the adjacent stopper portions 56, and the inner surfaces thereof are opposed to the stopper portions 56 of the adjacent holding bridges at specified intervals as shown in FIG. 11A when the wiper blade using the rubber holder 51 touches the windshield 12 or in a normal state.

As shown in FIG. 11C, when excessive force is applied in the forward direction, that is, in the direction where the rubber holder 51 is bent forward over the windshield 12, the distance between the adjacent stoppers 56 is widened, and respective stoppers 56 touch the inner surface of the stopper ring 57. Therefore, the distance between the adjacent stopper portions 56 is restricted, that is, the distance between the holding bridges 52 is restricted within a predetermined distance. At this time, the rod-shaped spring members 24 are kept deformed in the range of elastic deformation and do not reach the range of plastic deformation. That is, when the rod-shaped spring members 24 is in the range of elastic deformation, the stopper ring 57 as restricting means prevents the distance between the holding bridges 52 from being increased over a predetermined distance to restrict the excessive bending of the rubber holder 51. Therefore, the deformation of the rod-shaped spring members 24 is restricted within the range of elastic deformation even if the excessive bending force is applied in the direction where the rubber holder 51 is bent forward, and the plastic deformation is prevented.

As described above, the stopper portion 56 and the stopper ring 57 prevent the rubber holder 51 from being bent excessively even if the excessive bending force is applied. Therefore, the plastic deformation of the rod-shaped spring members 24 can be prevented and the durability of the wiper blade using the rubber holder 51 can be improved.

Incidentally, in the illustrated case, the ring-shaped stopper ring 57 is used as the restricting means. Alternatively, restricting means with a different shape such as the U-shaped stopper ring can be used as long as it can restrict the distance between the holding bridges 52 within the predetermined distance.

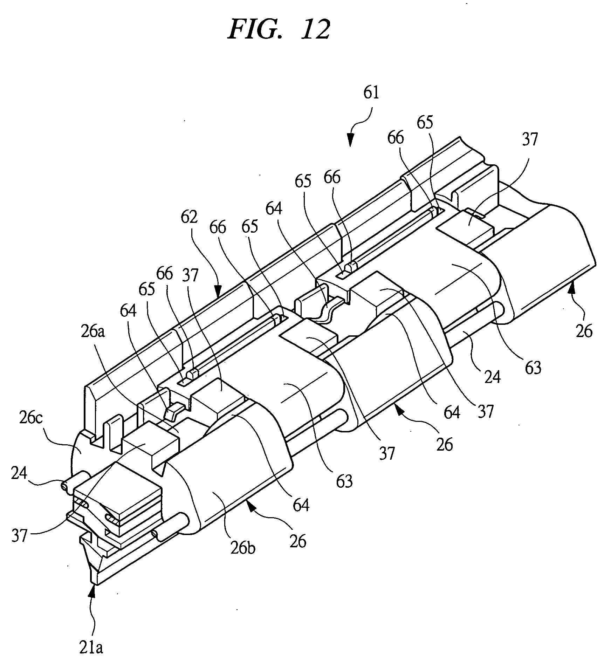

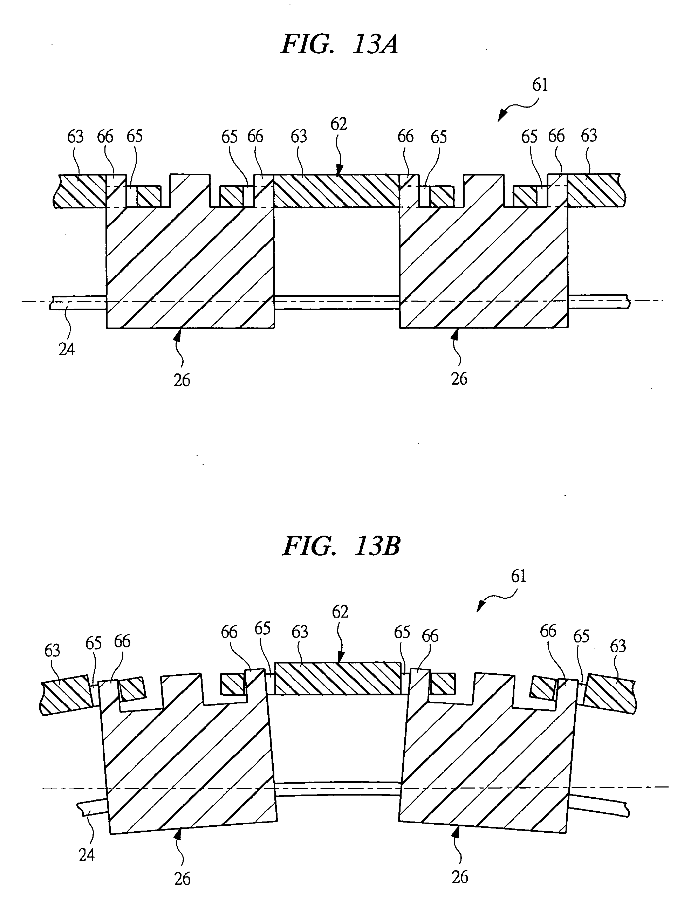

FIG. 12 is a perspective view showing a part of a modified embodiment of the rubber holder on the DR side shown in FIG. 3A. FIG. 13A is a cross-sectional view illustrating the normal state of the rubber holder shown in FIG. 12. FIG. 13B is a cross-sectional view illustrating the state of the rubber holder when excessive force is applied to the rubber holder in the forward direction.

Similar to the rubber holder 22a shown in FIG. 3A, the rubber holder 61 shown in FIG. 12 has such a structure that a plurality of holding bridges 26 are connected to each other by the rod-shaped spring members 24 at specified intervals in the longitudinal direction, which makes the holder 61 elastically deformable in the direction perpendicular to the windshield 12. Similar to the stopper 34 shown in FIG. 5, the stopper 62 used in the rubber holder 61 as excessive deformation restricting means has a plurality of deformation restricting blocks 63 disposed between the adjacent holding bridges 26 and the linking strip portions 64 for connecting the deformation restricting blocks 63 to each other in the longitudinal direction.

As shown in FIG. 13A, when the rubber holder 61 is in a normal state, that is, when the wiper blade on the DR side 18a using the rubber holder 61 touches the windshield 12, the deformation restricting blocks 63 are sandwiched between the holding bridges 26 while touching them. Therefore, the deformation in the direction where the rubber holder 61 is bent backward with respect to the windshield 12 is restricted. More specifically, even if the excessive bending force in the reverse direction with respect to the windshield 12 is applied to the rubber holder 61, since the deformation restricting blocks 63 are sandwiched between the adjacent holding bridges 26, it is possible to prevent the holding bridges 26 from approaching within a predetermined distance, that is, restrict the distance between the adjacent holding bridges 26. Thus, the excessive deformation of the rubber holder 61 is restricted.

Also, engaging bores 65 are formed on both sides of the deformation restricting blocks 63 in the longitudinal direction thereof. An engaging projection 66 formed on the holding bridge 26 adjacent to one side of the deformation restricting block 63 is engaged with one engaging bore 65, and an engaging projection 66 formed on the holding bridge 26 adjacent to the other side of the deformation restricting block 63 is engaged with the other engaging bore 65. The length of the engaging bore 65 in the longitudinal direction thereof is longer than the engaging projection 66. As can be seen from FIG. 13A, when the rubber holder 61 is in a normal state, the engaging projection 66 is so designed as to be positioned on the side of the deformation restricting block 63 of the engaging bore 65. Also, when the excessive bending force in the forward direction with respect to the windshield 12 is applied to the rubber holder 61, as shown in FIG. 13B, the distance between the holding bridges 26 is widened and the engaging projections 66 move in the engaging bores 65. When the adjacent holding bridges 26 are away from each other and the distance therebetween reaches the predetermined distance, the engaging projections 66 move to the outer ends of the engaging bores 65 and restrict the distance between the holding bridges 26 from further increasing. In that way, even when the excessive bending force in the forward direction with respect to the windshield 12 is applied to the rubber holder 61, the deformation restricting blocks 63 as restricting means restrict the distance between the adjacent holding bridges 26 and the excessive deformation of the rubber holder 61 can be prevented.

In this case, the deformation in the direction where the rubber holder 61 is bent forward is restricted by the engaging bores 65 formed on the deformation restricting blocks 63 and the engaging projection 66 formed on the holding bridges 26 and engaged with the engaging bores 65. The linking strip 64 has only a function to connect the deformation restricting blocks 63 with each other to facilitate the attachment of the deformation restricting blocks 63.

In the illustrated case, the deformation restricting block 63 is formed in such a shape as to have two ring-shaped engaging bores 65 engaged with the engaging projections 66 formed on the holding bridges 26. Alternatively, a deformation restricting block formed in a different shape is also available as long as the distance between the engaging projections 66 formed on the adjacent holding bridges 26 can be restricted. For example, a U-shaped engaging bore for engaging two engaging projections 66 from the outside and a single ring-shaped engaging bore for engaging two engaging projections 66 from the outside are also available.

Incidentally, the members and component parts in FIGS. 12 and 13 corresponding to those mentioned above are denoted by the same reference numerals. The cross-sectional view shown in FIG. 13 shows the surface including the engaging projection.

It is to be understood that the present invention is not limited to the foregoing embodiments and susceptible of various changes without departing from the scope thereof. In the embodiments mentioned above, for example, the rubber holder on the DR side 22a is formed from 24 holding bridges 26 made of resin. Alternatively, the holding bridge can be formed by using metal and so forth.

Also, for the connecting portion of the wiper arms 15a and 15b, the U-shaped or bayonet-shaped arm is also available in addition to the connection by means of the clip 32 in the embodiment described above.

### INDUSTRIAL APPLICABILITY

The present invention can be applied to the production of wiper blades in which the plastic deformation of rod-shaped spring members can be prevented and the durability thereof can be improved even when the excessive bending force is applied to the wiper blade.

## Claims

1. A wiper blade attached to a wiper arm swingably provided on a vehicle and wiping a windshield by swingably moving on said windshield, said wiper blade comprising:
a blade rubber touching said windshield;
a rubber holder having a plurality of holding bridges for holding said blade rubber and rod-shaped spring members for connecting said holding bridges to one another at specified intervals, said rubber holder being elastically deformable in a direction perpendicular to said windshield; and
excessive deformation restricting means for restricting deformation of said rod-shaped spring member within a range of elastic deformation when excessive bending force is applied to said rubber holder.

2. The wiper blade according to claim 1,
wherein said adjacent holding bridges are provided with interfering portions which interfere with each other when excessive bending force is applied to said rubber holder.

3. The wiper blade according to claim 1, further comprising:
a plurality of deformation restricting blocks provided between said holding bridges adjacent to each other and sandwiched between said holding bridges when excessive bending force is applied to said rubber holder.

4. The wiper blade according to claim 3, further comprising:
linking strip portions for connecting said deformation restricting blocks to one another,
wherein the distance between said adjacent deformation restricting blocks is restricted when excessive bending force is applied to said rubber holder.

5. The wiper blade according to claim 1, further comprising:
restricting means for restricting the distance between said adjacent holding bridges when excessive bending force is applied to said rubber holder.

6. The wiper blade according to claim 2,
wherein said holding bridge is formed by a steel plate and said interfering portion is formed by bending a body portion of said holding bridge.

7. The wiper blade according to claim 6, further comprising:
restricting means for restricting the distance between said adjacent interfering portions.
